# EUROPEAN PATENT SPECIFICATION

(11) **EP 4 012 370 B1**
(45) Date of publication and mention of the grant of the patent: **04.06.2025**
(21) Application number: 19915577.1
(22) Date of filing: 07.08.2019
(51) Int. Cl.: G01M 17/08, B61F 5/24, B61K 9/08

(54) **RAILWAY VEHICLE ANOMALY DETECTION DEVICE**
ANOMALIEERKENNUNGSVORRICHTUNG FÜR SCHIENENFAHRZEUGE
DISPOSITIF DE DÉTECTION D'ANOMALIE DE VÉHICULE FERROVIAIRE

(43) Date of publication of application: 15.06.2022
(73) Proprietor: Hitachi, Ltd., Tokyo 100-8280 (JP)
(72) Inventor: HARA, Kosuke, Tokyo 1008280 (JP); FURUTANI, Ryo, Tokyo 1008280 (JP); IWASAKI, Katuyuki, Tokyo 1008280 (JP); WATANABE, Takao, Tokyo 1008280 (JP)
(74) Representative: Mewburn Ellis LLP
(86) International application number: PCT/JP2019/031152
(87) International publication number: WO 2021/024423

(56) References cited:
- WO-A1-2018/155348
- CN-A- 103 592 122
- JP-A- 2004 170 080
- JP-A- 2011 245 917
- JP-A- 2011 245 917
- JP-A- 2018 136 270
- JP-A- 2018 179 986
- JP-A- H1 020 930
- JP-A- S6 196 440
- US-A1- 2015 051 792
- US-A1- 2018 292 296

## Description

### Technical Field

The present invention relates to an abnormality detection apparatus for at least two rail vehicles.

### Background Art

Although there is increasing demand to improve performance of maintenance of railway vehicles, frequent maintenance decreases train operation efficiency. Therefore, in the field of railway vehicles, a technical concept of carrying out maintenance at required timing, which is called CBM (Condition Based Maintenance), attracts attention for the purpose of, inter alia, curtailing downtime during which systems and services in operation will stop and reducing maintenance cost. In order to realize CBM, there is a need for an abnormality detection apparatus capable of early detecting abnormality regarding vibratory comfort and safety of railway vehicles and deciding on a cause of the abnormality.

As such an abnormality detection apparatus, for example, there is a technology disclosed in Patent Literature 1.

Patent Literature 2 proposes an abnormality monitoring device which includes: an acceleration data acquisition unit for acquiring measurement data regarding the acceleration of a vehicle; an abnormality presence determination unit for determining the presence or absence of an abnormality on the basis of the comparison between the acceleration and a threshold value; a frequency analysis unit for analyzing the frequency of the acceleration in a case where the abnormality presence determination unit has determined the presence of an abnormality; and an abnormality type specification unit for specifying the type of an abnormality on the basis of the pattern of the frequency.

Patent Literature 3 proposes a method for the identification of poles and modal vectors of a road or rail vehicle, by means of the analysis of the movements or speeds or accelerations (output of the system) acquired in assigned measuring points of said vehicle, wherein said poles and modal vectors are determined by means of the fitting of the data relating to said outputs of the system on the basis of a mathematical model which describes the interaction between road or railway and said vehicle.

Patent Literature 4 proposes a railroad vehicle state monitoring device which includes: an amplitude ratio calculator for calculating an amplitude ratio between a vehicle body vibration acceleration and an axle box vibration acceleration of the railroad vehicle; a threshold determination processor for performing determination based on the amplitude ratio and a prescribed threshold; and a threshold determination processor for performing determination based on the axle box vibration acceleration and the prescribed threshold.

### Citation List

### Patent Literature

Patent Literature 1: Japanese Unexamined Patent Application Publication No. 2004-170080
Patent Literature 2: Japanese Unexamined Patent Application Publication No. 2018-136270
Patent Literature 3: US Unexamined Patent Application Publication No. 2018/292296
Patent Literature 4: Japanese Unexamined Patent Application Publication No. 2011-245917

### Summary of Invention

### Technical Problem

In Patent Literature 1, disclosed is an abnormality detection apparatus that detects abnormality of a bogie, using acceleration of a bogie frame, which is acquired by an acceleration sensor provided in a bogie frame, and acceleration of a wheel axle, which is acquired by an acceleration sensor provided in a wheel axle. According to the abnormality detection apparatus disclosed in Patent Literature 1, acceleration of a bogie is estimated with a physical model to which acceleration of a wheel axle acquired by an acceleration sensor is input and which outputs acceleration of a bogie in normal operation. Then, depending on whether or not estimated and measured values of the acceleration are close, judgment can be made as to whether or not abnormality occurs in the bogie.

Here, in the abnormality detection apparatus disclosed in Patent Literature 1, to detect abnormality of a bogie, it is required to provide acceleration sensors respectively in both a wheel axle and a bogie frame with respect to one bogie. However, because larger vibration acceleration occurs in a wheel axle and a bogie frame than in a vehicle body, acceleration sensors having a high measurable range need to be used, which has brought about an increase in installation cost. Besides, because a wheel axle and a bogie frame have less space for installing an acceleration sensor as compared with a vehicle body, also, there has arisen a problem in which the degree of freedom of installing an acceleration sensor is limited. Furthermore, because a great number of acceleration sensors are required in the abnormality detection apparatus disclosed in Patent Literature 1, also, there has arisen, inter alia, a problem in which time and cost for maintenance of these sensors increases.

The present invention has been developed in view of the problems noted above and is intended to provide an abnormality detection apparatus for rail vehicles capable of deciding on abnormality of what portion of a vehicle causing abnormal vibration of a vehicle, when occurring, based on information from sensors installed in vehicle bodies, while curbing costs for installation and maintenance.

### Solution to Problem

To solve the problems noted above, claim 1 provides an abnormality detection apparatus for at least two rail vehicles pertaining to the present invention.

### Advantageous Effects of Invention

According to the present invention, it is possible to provide an abnormality detection apparatus for rail vehicles capable of deciding on abnormality of what portion of a vehicle causing abnormal vibration of a vehicle, when occurring, based on information from sensors installed in vehicle bodies, while curbing costs for installation and maintenance. Thereby, it is also enabled to curtail downtime of vehicles and reduce maintenance cost.

Problems, configurations, and advantageous effects other than described above will be made apparent from the following description of embodiments.

### Brief Description of Drawings

Fig. 1 is a system configuration diagram of an abnormality detection apparatus for railway vehicles, depicting a first embodiment of the present invention.
Fig. 2 is a diagram depicting time historical waveforms of vehicle body's transverse acceleration in a case where abnormal vibration has occurred in a vehicle B in the abnormality detection apparatus for railway vehicles of the first embodiment.
Fig. 3 is a flowchart illustrating a processing procedure of a data analysis unit 100 in the abnormality detection apparatus for railway vehicles of the first embodiment.
Fig. 4 is a flowchart illustrating a processing procedure of a comparison processing unit 200 in the abnormality detection apparatus for railway vehicles of the first embodiment.
Fig. 5A is a diagram representing a relationship between a measured value of vehicle body's transverse acceleration PSD of a vehicle A placed in normal condition and frequency.
Fig. 5B is a diagram representing a relationship between a measured value of vehicle body's transverse acceleration PSD of the vehicle B placed in abnormal condition and frequency.
Fig. 6 is a diagram representing a PSD ratio between vehicle body's transverse acceleration PSD of the vehicle A placed in normal condition and vehicle body's transverse acceleration PSD of the vehicle B placed in abnormal condition in the comparison processing unit in the first embodiment.
Fig. 7 is a flowchart illustrating a processing procedure of a parameter estimation unit 400 in the abnormality detection apparatus for railway vehicles of the first embodiment.
Fig. 8A is a characteristic diagram representing both a measured value (a solid line) and an analytic value (a dotted line) before estimation by the parameter estimation unit in the first embodiment.
Fig. 8B is a characteristic diagram representing both a measured value (a solid line) and an analytic value (a dotted line) after estimation by the parameter estimation unit in the first embodiment.
Fig. 9 is a flowchart illustrating a processing procedure of an abnormality cause estimation unit 400 in the abnormality detection apparatus for railway vehicles of the first embodiment.
Fig. 10 is a diagram representing a result of estimating a cause of abnormality by the abnormality cause estimation unit in the first embodiment.
Fig. 11 is diagram illustrating a processing flow of a parameter estimation unit in an abnormality detection apparatus for railway vehicles of a second embodiment.
Fig. 12 is diagram illustrating a processing flow of a parameter estimation unit in an abnormality detection apparatus for railway vehicles of a third embodiment.

### Description of Embodiments

In the following, an abnormality detection apparatus for rail vehicles of the present invention will be described with reference to the drawings. Rail vehicles are vehicles that are operated to travel along rail tracks laid and include railway vehicles, monorail vehicles, streetcars, new transportation vehicles, etc. Railway vehicles are taken as a typical example of the rail vehicles and embodiments of the present invention are described.

### [First Embodiment]

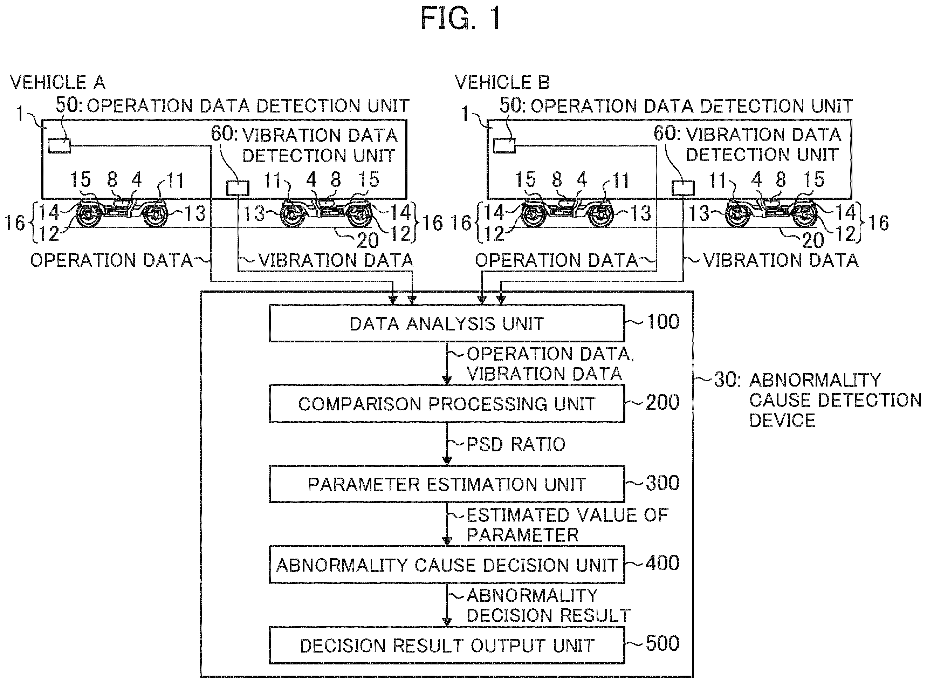

First, a configuration of an abnormality detection apparatus for railway vehicles is described with reference to Fig. 1.

Fig. 1 is a functional block diagram depicting a system configuration of the abnormality detection apparatus for railway vehicles.

Rail vehicles A and B (hereinafter referred to as vehicles A and B) that travel on a rail track 20 vehicle each have a vehicle body 1 and bogies 16, respectively. The vehicle body 1 is mounted on the bogies 16 via air suspension spring 8. A bogie 16 is comprised of, inter alia, a bogie frame 11, an air suspension spring 8, a yaw damper 4, an axle box body 12, a wheel axle 13, an axle spring device 14, and an axle box support rubber 15 which serves as a housing of bearings for the wheel axle 13.

The wheel axle 13 is rotatably held with axle box bodies 12, elastic suspension in a vertical direction is provided by the axle spring device 14 between an axle box body 12 and a bogie frame 11, and elastic suspension in a transverse direction is provided by the axle box support rubber 15. The air suspension springs 8 are disposed between the vehicle body 1 and the bogie frames 11 and, through these air suspension springs 8, the vehicle body 1 is elastically supported by the bogie frames 11.

On the floor of the vehicle body 1, for example, a vibration data detection unit (a vibration data acquisition unit) 60 is installed to acquire data on vibration of the vehicle body 1.

It should be noted that a physical quantity that the vibration data detection unit 60 detects to acquire data on vibration is not limited to acceleration; speed, displacement, distortion, sound, etc. may be detected. However, description in the present embodiment assumes that the vibration data detection unit 60 detects acceleration.

Besides, although the vibration data detection unit 60 is installed in the vehicle body 1 having relatively plenty of space for installation, the same may also be installed on, inter alia, a bogie frame 11 and an axle box body 12, to enable it to detect vibration of these parts. Description in the present embodiment assumes that the vibration data detection unit 60 was installed in the vehicle body 1.

Besides, although multiple vibration data detectors 60 may be installed in one vehicle, description in the present embodiment assumes that a single vibration data detection unit 60 was installed. Moreover, a position in which the vibration data detection unit 60 is installed may be a central position of the vehicle body 1, a position directly above a bogie 16, an end portion of the vehicle body 1, such as a position where a vehicle equipment compartment is present.

Vibration data acquisition by the vibration data detection unit 60 is applicable in any of the following directions: in longitudinal, transverse, and vertical directions with respect to a traveling direction of the railway vehicle, translational (longitudinal translational, transverse translational, and vertical translational) directions and a rotational (roll pitch yaw) direction. Description in the present embodiment assumes that the vibration data detection unit 60 detects vibration in a transverse translational direction.

The vehicle body 1 is equipped with an operation data detection unit (an operation data acquisition unit) 50 having a function to acquire operation data such as traveling speed, a traveling position, and a vehicle occupancy rate from, e.g., an operational administrative system which administrates operation data.

Additionally, in Fig. 1, an example is presented in which two rail vehicles (hereinafter simply referred to as vehicles) are each only equipped with the vibration data detection unit 60 and the operation data detection unit 50; however, three or more multiple vehicles may be equipped with them.

Besides, the vibration data detection unit 60 and the operation data detection unit 50 may be provided in multiple vehicles in one train set or can also be provided in each vehicle in different train sets traveling on the same rail track.

An abnormality cause detection device 30 includes a data analysis unit 100, a comparison processing unit 200, a parameter estimation unit 300, an abnormality cause decision unit 400, and a decision result output unit 500 and these units constitute the abnormality detection apparatus to detect a cause of abnormal vibration of a railway vehicle. Additionally, the parameter estimation unit 300 and the abnormality cause decision unit 400 constitute a diagnosis unit.

Additionally, it is desirable to install the abnormality cause detection device 30 in a ground facility such as a rail yard where inspection and maintenance of vehicles are performed; however, that device may be installed as on-vehicle equipment.

The data analysis unit 100, comparison processing unit 200, parameter estimation unit 300, abnormality cause decision unit 400, and decision result output unit 500 are, for example, configured as those of a computing device to perform processing tasks, which will be described later, according to programs stored within the abnormality cause detection device 30.

The data analysis unit 100 has a function to acquire, from multiple vehicles, vibration data detected by the vibration data detection unit 60 and operation data detected by the operation data detection unit 50, distinguish whether a subject vehicle is placed in normal condition or abnormal condition, and output vibration data and operation data of the vehicles. A concrete processing flow that is performed by the data analysis unit 100 will be described later.

The comparison processing unit 200 has a function to acquire vibration data and operation data of the vehicles placed in either of abnormal and normal conditions, which has been output by the data analysis unit 100, and output a result of comparison between a vehicle in abnormal condition and a vehicle in normal condition, based on the acquired data. A concrete processing flow that is performed by the comparison processing unit 200 will be described later.

The parameter estimation unit 300 has a function to estimate parameters regarding vehicle internal conditions from the result of comparison between a vehicle in abnormal condition and a vehicle in normal condition, which has been output by the comparison processing unit 200.

Additionally, the parameters regarding a vehicle internal condition are those that are likely to be a cause of abnormality of vibration of a railway vehicle and refer to, for example, rigidity of an axle box support rubber 15 of a box support device installed in a railway vehicle, an attenuation coefficient of a yaw damper 4, and a wheel thread inclination of a wheel axle 13 among others. A concrete processing flow that is performed by the parameter estimation unit 300 will be described later.

The abnormality cause decision unit 400 has a function to decide on a cause of abnormality from the estimated values of parameters which has been output by the parameter estimation unit 300. A concrete processing flow that is performed by the abnormality cause decision unit 400 will be described later.

The decision result output unit 500 has a function to notify, inter alia, a driver of the vehicle body 1 and a ground operations manager or maintenance personnel of the cause of abnormality which has been output by the abnormality cause decision unit 400 via a monitor, a speaker, etc.

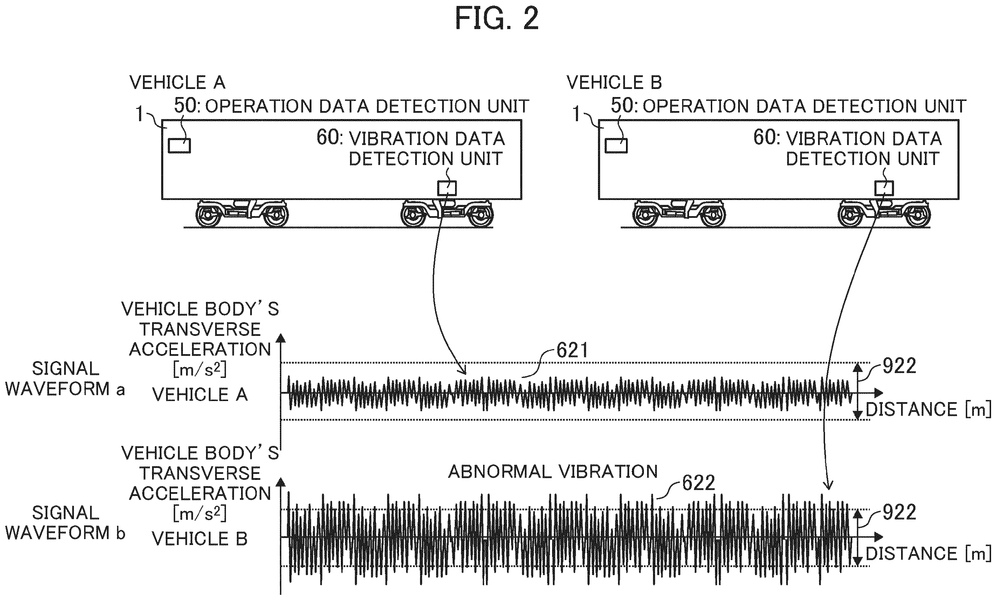

Then, using Figs. 2 thru 10, descriptions are provided about concrete processing flows by which the abnormality detection apparatus for railway vehicles of the present embodiment decides on a cause of abnormality.

Here, the processing flows for abnormality detection are described, using an example case where abnormal vibration has occurred, attributed to a cause that is a decrease in the attenuation coefficient because of oil leakage in the yaw damper 4 (see a vibration waveform b in Fig. 2).

Additionally, description in the present embodiment assumes a case where an acceleration sensor in a transverse translational direction (hereinafter referred to as a transverse acceleration sensor) installed directly above the bogie's position was used as the vibration data detection unit 60.

A vibration waveform a in Fig. 2 is a chart presenting vehicle body's transverse acceleration 621 measured by a transverse acceleration sensor installed in a vehicle A in place corresponding to the rail track position and a vibration waveform b in Fig. 2 is a chart presenting vehicle body's transverse acceleration 622 measured by a transverse acceleration sensor installed in a vehicle B in place corresponding to the rail track position. In the vibration waveforms a and b, it is seen that the higher the measured acceleration, the larger will be waveform amplitude.

With the assumption that yaw dampers 4 in the vehicle A are normal, when oil leakage has occurred in a yaw damper 4 in the vehicle B, attributed to a cause that is a decrease in the attenuation coefficient of the yaw damper, the amplitude of vehicle body's transverse acceleration of the vehicle B becomes larger, as compared with that of the vehicle A, and abnormal vibration occurs in the vehicle B. This condition is revealed by the fact that amplitude of the vibration waveform b is significantly higher than amplitude of the vibration waveform a (e.g., an average), as presented in Fig. 2.

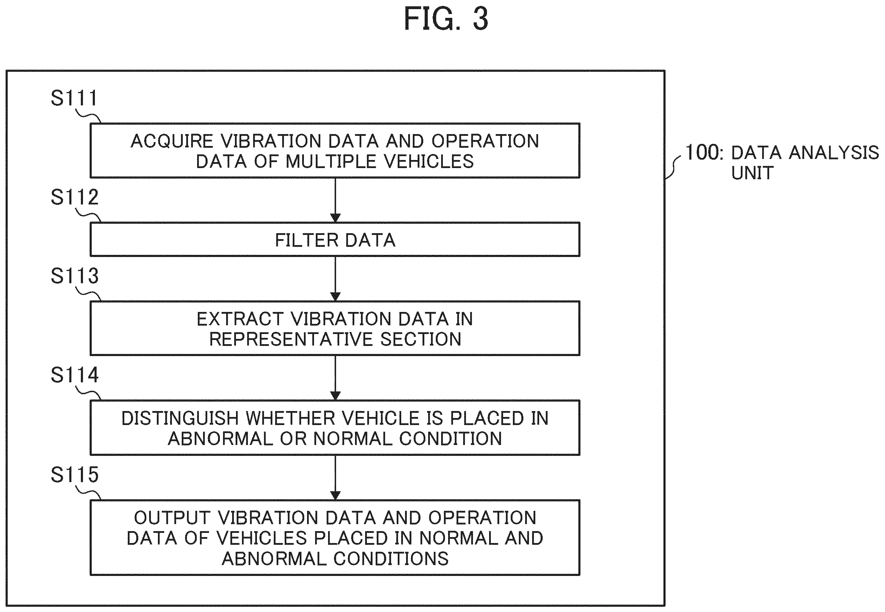

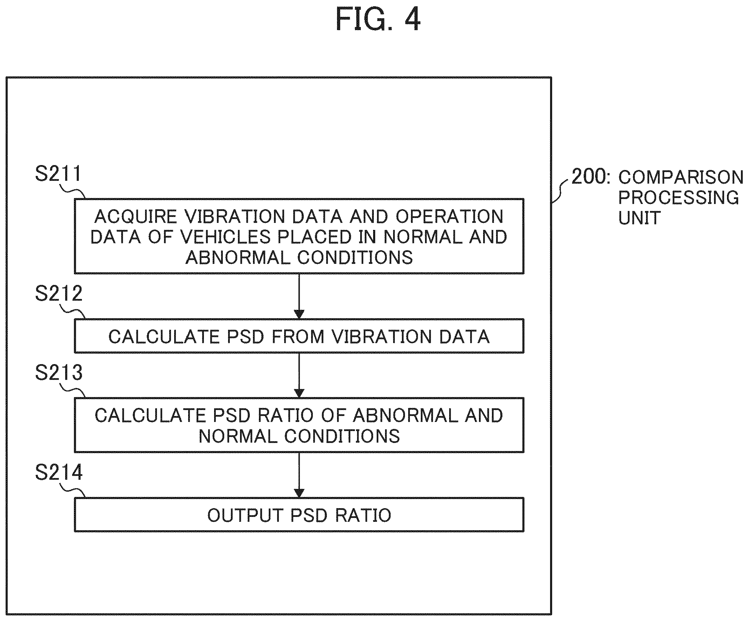

Fig. 4 is a flowchart to explain a processing procedure of the data analysis unit 100 in the abnormality detection apparatus for railway vehicles in Fig. 1. Operation according to the flowchart in Fig. 3 is as described below.

First, at step S111, the data analysis unit 100 acquires vehicle body's transverse acceleration measurements from the transverse acceleration sensors in the multiple vehicles and simultaneously acquires operation data such as a traveling position, traveling speed, and a vehicle occupancy rate from the operation data detection unit 50.

Then, at step S112, the data analysis unit 100 performs filtering on the vehicle body's transverse acceleration measurements acquired at step S111 using a commonly known filtering technique.

As the filtering, inter alia, preprocessing for analysis processing to be performed at step S113 is performed, such as processing to extract only a frequency band that is easily perceivable by human senses from the vehicle body's transverse acceleration measurements and processing to calculate a value of RMS (Root Mean Square) or a maximum of the acceleration measurements.

Moreover, at step S113, the data analysis unit 100 sets a traveling section or the like where vibration is especially large as a representative section from the filtered acceleration measurements and performs processing to extract vehicle body's transverse acceleration data and operation data such as traveling speed and a vehicle occupancy rate of each vehicle of, inter alia, the vehicles A and B in this representative section.

Through the processing at step S113, with regard to the vehicles A and B, vibration data in the same section can be extracted.

It should be noted that a representative section can be determined optionally, not limited to a traveling section where vibration is large. Also, there may be one representative section or two or more representative sections.

Additionally, as for a representative section, it is expedient to set a section for which, for each vehicle of, inter alia, the vehicles A and B, data pieces are present, measured under relatively similar measurement conditions including, inter alia, the following: traveling speed of each vehicle is equal or similar, the vehicle occupancy rates of each vehicle are similar, and measurement dates and time of each vehicle are close.

At step S114, the data analysis unit 100 compares vehicle body's transverse acceleration data pieces of the respective vehicles in the representative section and performs processing to distinguish whether each vehicle is placed in normal condition or abnormal condition. For distinguishing whether a vehicle is placed in normal condition or abnormal condition, a threshold based processing may be performed, i.e., a threshold of vehicle body's acceleration is set beforehand and a determination is made as to whether or not the threshold is exceeded; alternatively, a commonly known method may be used, i.e., distinguishing is performed using a method such as Malanobis-Taguchi System.

In the case of the present embodiment, through the threshold-based processing or the like, the vehicle B producing large vibration that exceeds a threshold 922 which is presented in Fig. 2 should be judged to be placed in "abnormal condition" and the vehicle A whose vibration does not exceed the threshold 922 in "normal condition".

At step S115, the data analysis unit 100 outputs the vehicle body's transverse acceleration data and operation data in the representative section, extracted at step S113, in addition to distinguishing information as to whether each vehicle is placed in "normal condition" or "abnormal condition" to the comparison processing unit 200.

Fig. 4 is a flowchart to explain a processing procedure of the comparison processing unit 200 in the abnormality detection apparatus for railway vehicles in Fig. 1. Operation according to the flowchart in Fig. 4 is as described below.

First, at step S211, the comparison processing unit 200 acquires the distinguishing information, inter alia, indicating that the vehicle A is placed in normal condition and the vehicle B is placed in abnormal condition and the vehicle body's transverse acceleration data and operation data in the representative section.

Then, at step S212, from the acquired vehicle body's transverse acceleration data, the comparison processing unit 200 calculates vehicle body's transverse acceleration PSD (Power Spectrum Density) with respect to vehicle body's transverse acceleration of each vehicle. The PSD is a spectral function that gives expression as a power value per unit frequency width (a width of 1 Hz).

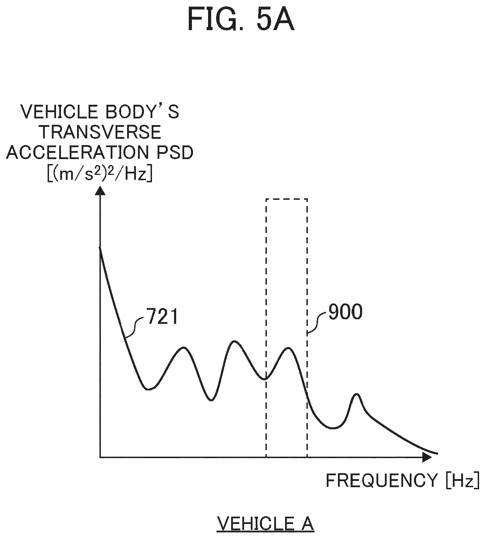

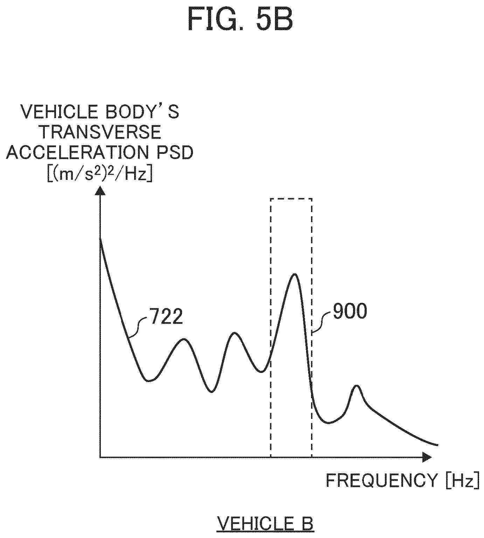

In the case of the present embodiment, for the vehicle A, the calculation gives a result as vehicle body's transverse acceleration PSD 721 of a vehicle placed in normal condition, as is presented in Fig. 5A; for the vehicle B, the calculation gives a result as vehicle body's transverse acceleration PSD 722 of a vehicle placed in abnormal condition, as is presented in Fig. 5B.

As presented in Figs. 5A and 5B, in a given frequency band 900, the vehicle body's transverse acceleration PSD 722 of the vehicle B becomes larger than the vehicle body's transverse acceleration PSD 721 of the vehicle A.

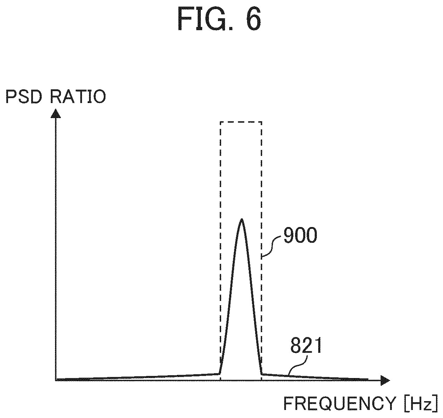

At step S213, the comparison processing unit 200 a calculates a PSD ratio 821 that is a ratio between the vehicle body's transverse acceleration PSD 721 of the vehicle A placed in normal condition and the vehicle body's transverse acceleration PSD 722 of the vehicle B placed in abnormal condition, as in Fig. 6.

This PSD ratio 821 indicates a frequency band in which PSD in abnormal condition differs from that in normal condition and a degree of the difference. Here, the PSD ratio 821 increases significantly in a frequency band 900, as is evident from Fig. 6.

Additionally, after ensuring that there is little influence of difference in response due to, inter alia, difference in rail track conditions between sections, because vibration data in the same section is extracted by the data analysis unit 100 beforehand, a change in response due to a change in transfer characteristics between the normal and abnormal conditions of the vehicles can be extracted as the PSD ratio 821.

And now, an example where the PSD ratio 821 is used was described in steps S212 and S213. However, any value indicating a characteristic quantity regarding a change between the abnormal and normal conditions can be used instead of the PSD ratio; as an example, inter alia, a ratio between an RMS value of vehicle body's transverse acceleration in abnormal condition and that in normal condition can be used.

At step S214, the comparison processing unit 200 outputs this PSD ratio 821 to the parameter estimation unit 300.

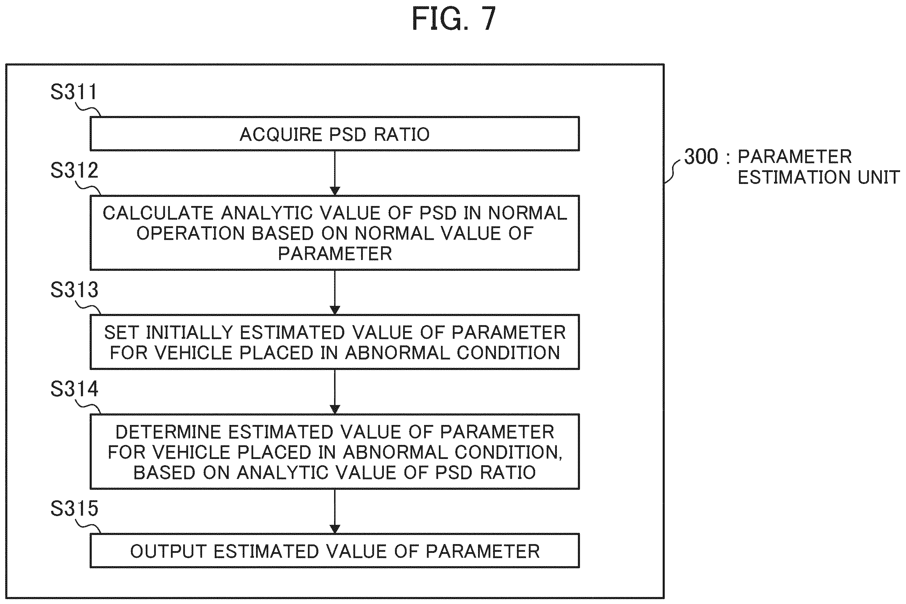

Next, a processing flow of the parameter estimation unit 300 is described with Fig. 7. Operation according to the flowchart in Fig. 7 is as described below.

Additionally, description in the present embodiment assumes a case where the parameters to be estimated to identify a cause of abnormality are the spring constant of an axle box support rubber 15, the attenuation coefficient of a yaw damper 4, and the wheel thread inclination of a wheel axle 13.

First, at step S311, the parameter estimation unit 300 acquires the PSD ratio 821 which has been output by the comparison processing unit 200. This is referred to as the measured PSD ratio 821.

Then, at step S312, using a dynamic model, the parameter estimation unit 300 calculates an analytic value of vehicle body's transverse acceleration PSD, when the parameters regarding vehicle internal conditions have values under normal condition.

This dynamic model is a model for predicting vibration characteristics of a railway vehicle. Diverse dynamic models can be used according to a type of vibration that one wants to predict, such as a vehicle transverse dynamic model to predict vehicle body's transverse vibration and a vehicle vertical dynamic model to predict vehicle body's vertical vibration, when a virtual vehicle in which the vehicle body 1, bogies 16, and wheel axles 13 are simulated with rigid bodies, axle box support rubbers 15, yaw dampers 4, and others are simulated with springs and dampers, and the respective rigid bodies are connected with the springs and dampers travels on a virtual rail track that simulates track irregularities, e.g., such as an alignment irregularity of a rail track 20 (a degree of irregularity of the lateral surfaces of rails in a longitudinal direction) and a gauge irregularity (an error in a fundamental dimension of an interval between left and right rails).

Additionally, to define a virtual rail track that simulates track irregularities, if there is actually measured track irregularity data, the track irregularity data may be used. However, if there is no track irregularity data measured, inter alia, a method may be adopted in which track irregularity data sets typical of track states (such as "good", "ordinary", and "poor" states) are prepared beforehand and a virtual rail track is defined by selecting and using one of these sets according to a train line or the like of a vehicle in service.

Besides, by using conditions such as traveling speed and a vehicle occupancy rate detected by the operation data detection unit 50 as the conditions for analysis with a dynamic model, estimation with high accuracy reflecting actual traveling conditions is possible.

In the present embodiment, with the parameters such as the spring constant of an axle box support rubber 15, the attenuation coefficient of a yaw damper 4 and the wheel thread inclination of a wheel axle 13 being set to normal values, an analytic value of vehicle body's transverse acceleration PSD is calculated using a dynamic model.

Additionally, as for the normal values, a design value or an element test value is used for the spring constant of an axle box support rubber 15 and the attenuation coefficient of a yaw damper 4 and, inter alia, a value in new product condition or a control value in maintenance is used for the wheel thread inclination of a wheel axle 13.

At step S313 and subsequent steps, the parameter estimation unit 300 estimates the parameters for the vehicle placed in abnormal condition.

At step S313, first, the parameter estimation unit 300 sets initially estimated values of the parameters. The initially estimated values of the parameters may be either normal values of the parameters or randomly generated values.

In the present embodiment, the parameter estimation unit 300 sets the initially estimated values of the spring constant of an axle box support rubber 15, the attenuation coefficient of a yaw damper 4, and the wheel thread inclination of a wheel axle 13 among others.

At step S314, the parameter estimation unit 300 estimates the parameters in abnormal condition using the measured PSD ratio 821 processed by the comparison processing unit 200.

Using the initially estimated values of the parameters set at step S313, first, the parameter estimation unit 300 calculates an analytic value of vehicle body's transverse acceleration PSD with the parameters having the initially estimated values by using the dynamic model.

At step S314, then, the parameter estimation unit 300 calculates an analytic PSD ratio 822 that is a ratio between the analytic value of vehicle body's transverse acceleration PSD with the parameters having the initially estimated values and the analytic value of vehicle body's transverse acceleration PSD with the parameters having values under normal condition, calculated at step S312.

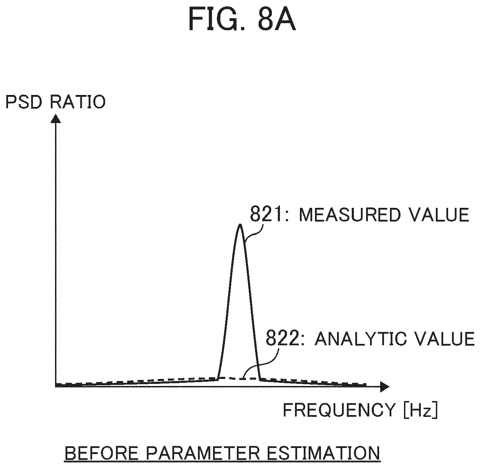

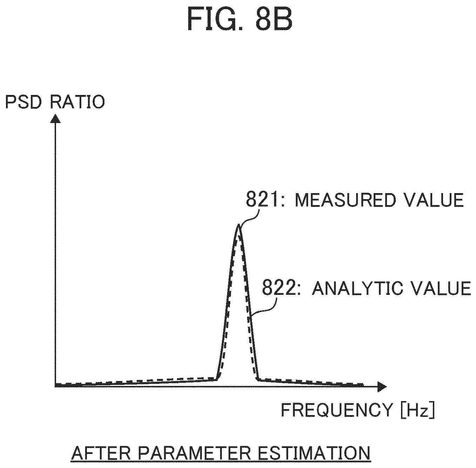

Then, the parameter estimation unit 300 determines estimated values of the parameters so that the analytic PSD ratio 822 will match the measured PSD ratio 821, i.e., an error will be minimized, as is presented in Figs. 8A and 8B.

As an index of error evaluation, any index that makes it possible to evaluate the error can be used without restrictions; nevertheless, in the present embodiment, a value is used that is obtained by integrating difference between measured PSD ratio 821 and the analytic PSD ratio 822 per frequency of PSD ratio (this value will be referred to as an integrated difference value, hereinafter), as is presented in Figs. 8A and 8B.

In the present embodiment, the estimated values of the parameters are obtained to make matching between the measured PSD ratio 821 which was calculated and the analytic PSD ratio 822, as is presented in Fig. 8B, with regard to the spring constant of an axle box support rubber 15, the attenuation coefficient of a yaw damper 4, and the wheel thread inclination of a wheel axle 13 among others.

Fig. 8A is a characteristic diagram with frequency being plotted on the abscissa and PSD ratio plotted on the ordinate, presenting the measured PSD ratio 821 represented in a sold line and the analytic PSD ratio 822 represented in a dotted line before parameter estimation and Fig. 8B is a characteristic diagram with frequency being plotted on the abscissa and PSD ratio plotted on the ordinate, presenting the measured PSD ratio 821 represented in a sold line and the analytic PSD ratio 822 represented in a dotted line after parameter estimation.

Before parameter estimation, as in Fig. 8A, a large difference between the measured and analytic values in some frequency band in which abnormal vibration has occurred; whereas, after parameter estimation, as in Fig. 8B, the measured and analytic values almost match with little difference.

After the termination of estimation, at step S315, the parameter estimation unit 300 outputs the estimated values of the parameters to the abnormality cause decision unit 400.

And now, in the present embodiment, the description has been provided, assuming that one transverse acceleration sensor was installed in each vehicle body 1. On the other hand, assuming a case where transverse acceleration sensors were installed in, inter alia, the vehicle body 1, bogies 16, and axle box bodies 12 respectively, by updating the parameters so that an analytic value will match multiple measured values of transverse acceleration detected from these sensors, it is possible to make the accuracy of parameter estimation higher.

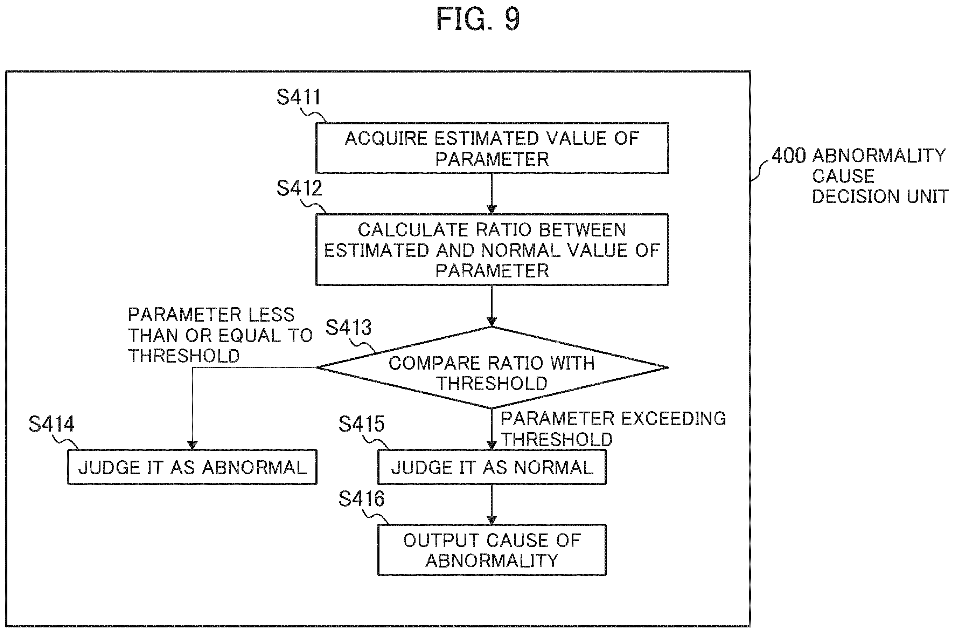

Next, a processing flow of the abnormality cause decision unit 400 is described with Fig. 9. Operation according to the flowchart in Fig. 9 is as described below.

First, at step S411, the abnormality cause decision unit 400 acquires the estimated values of the parameters which have been output by the parameter estimation unit 300.

In the present embodiment, the abnormality cause decision unit 400 acquires the estimated values of the following: the spring constant of an axle box support rubber 15, the attenuation coefficient of a yaw damper 4, and the wheel thread inclination of a wheel axle 13.

Then, at step S412, the abnormality cause decision unit 400 calculates a ratio between the estimated and normal values of each parameter.

Then, at step S413, the abnormality cause decision unit 400 compares this ratio with a preset threshold with respect to each parameter and judges a parameter as normal or abnormal.

In particular, for a parameter of which this ratio is less than or equal to the threshold, because it can be regarded as close to normal, the abnormality cause decision unit 400 judges the parameter as normal (step S414). On the other hand, for a parameter of which this ratio exceeds the threshold, the abnormality cause decision unit 400 judges the parameter as abnormal (step S415).

Then, at step S416, the abnormality cause decision unit 400 outputs a parameter judged as abnormal as a cause of abnormality to the decision result output unit 500.

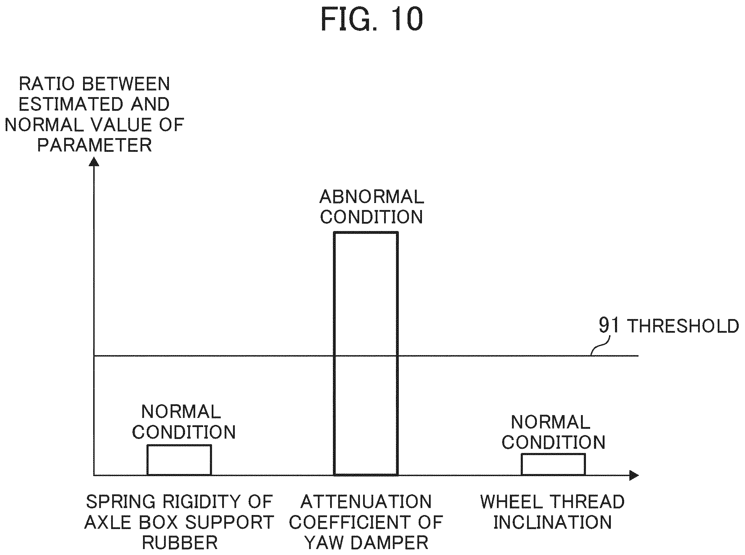

Fig. 10 is a schematic diagram which schematically represents an example of judging a parameter as normal or abnormal in step S413 and represents a relationship between the ratio between the estimated and normal values of a parameter and the threshold with regard to elements that may be a possible cause of abnormality, such as spring rigidity of an axle box support rubber 15, the attenuation coefficient of a yaw damper 4 and the wheel thread inclination.

In the example of Fig. 10, the attenuation coefficient of a yaw damper 4 is judged as abnormal, as the ratio between the estimated and normal values of this parameter exceeds the threshold 91. Then, a result of decision that a decrease in the attenuation coefficient of a yaw damper 4 is a cause of abnormality is output from the abnormality cause decision unit 400 to the decision result output unit 500.

Additionally, the larger the ratio between the estimated and normal values of a parameter, the parameter deviates from its normal value to a larger extent; therefore, the abnormality extent of the parameter can be evaluated on how large the ratio is.

The decision result output unit 500 notifies, inter alia, a vehicle driver and a ground operations manager or maintenance personnel of this result of estimating the cause of abnormality through the use of a commonly known communication technology.

As described hereinbefore, the abnormality detection apparatus for railway vehicles of the present embodiment is capable of estimating a cause of abnormality, like a decrease in the attenuation coefficient of a yaw damper 4.

### [Second Embodiment]

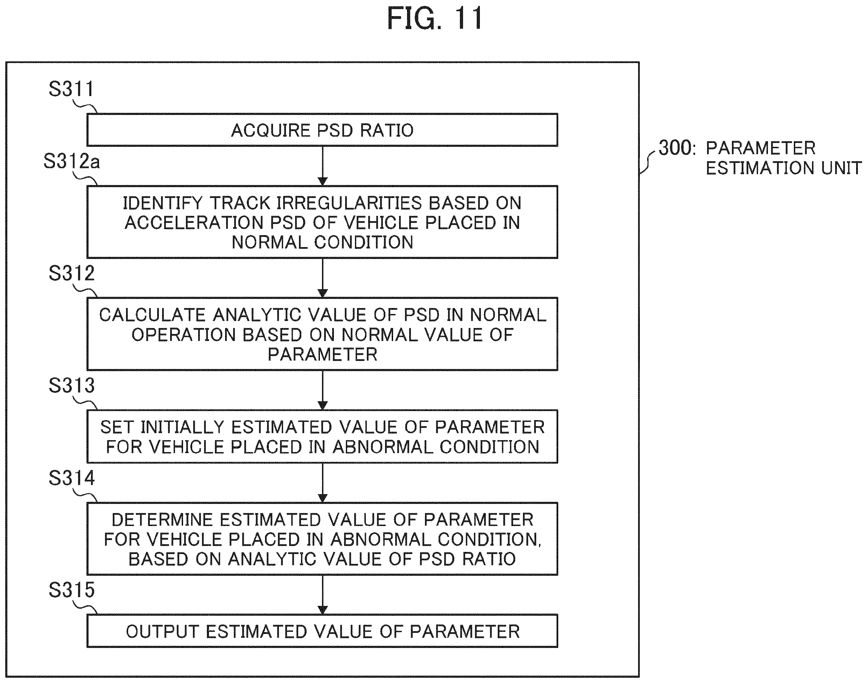

An abnormality detection apparatus for vehicles pertaining to the present embodiment has the same configuration as described for the foregoing first embodiment; however, its parameter estimation unit 300 performs processing which will be described below with a flowchart in Fig. 11. And now, only details that differ from the first embodiment are mainly described below.

In the present embodiment, a step S312a is added as processing that is performed by the parameter estimation unit 300 described in the first embodiment without using track irregularity data prepared beforehand, such as measured data, with regard to track irregularity data which is used for analysis with a dynamic model.

It should be noted that processing steps that are the same as those described in the first embodiment are assigned identical reference signs and their detail description is omitted.

First, at step S311, the parameter estimation unit 300 acquires the measured PSD ratio 821 processed by the comparison processing unit 200, as is the case for the first embodiment.

Then, at step S312a, the parameter estimation unit 300 performs processing to identify track irregularities, based on a measured value of vehicle body's transverse acceleration PSD of a vehicle placed in normal condition.

Here, the parameter estimation unit 300 performs the processing to identify track irregularity data so that the measured value of vehicle body's transverse acceleration PSD of the vehicle will match an analytic value of vehicle body's transverse acceleration PSD of the vehicle calculated with a dynamic model.

In the case of the present embodiment, track irregularity data is to be identified from vehicle body's transverse acceleration PSD of the vehicle A placed in normal condition.

In steps S313 thru S315 of processing, the parameter estimation unit 300 performs the same processing as in the first embodiment using the track irregularity data identified at step S312a.

It should be noted that, although an example of using vehicle body's transverse acceleration PSD was described for the present embodiment, no limitation to vehicle body's transverse acceleration PSD is intended, provided that track irregularity data can be identified.

As described hereinbefore, the abnormality detection apparatus for railway vehicles of the present embodiment is capable of deciding on a cause of abnormality without preparing track irregularity data beforehand.

### [Third Embodiment]

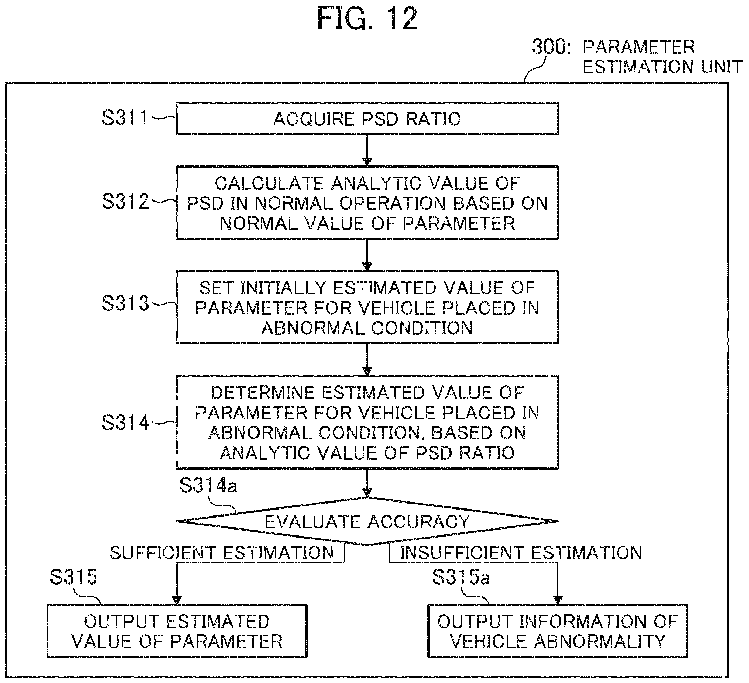

An abnormality detection apparatus for vehicles pertaining to the present embodiment has the same configuration as described for the foregoing first embodiment; however, its parameter estimation unit 300 performs processing which will be described below with a flowchart in Fig. 12. And now, only details that differ from the first embodiment are mainly described below.

In the abnormality detection apparatus of the present embodiment, step S314a and step S315a are added as processing that is performed by the parameter estimation unit 300 in a case where accuracy of estimating the parameters is low; these steps are added to the abnormality detection apparatus of the foregoing embodiments.

As described for the first embodiment, at step S314, parameter estimation unit 300 estimates the parameters so that an integrated difference value between the measured PSD ratio 821 and the analytic PSD ratio 822 of PSD ratio will be minimized. Here, the integrated difference value becomes an index indicating estimation accuracy.

At step S314a, if this integrated difference value is less than or equal to a preset threshold, the parameter estimation unit 300 judges that the estimation accuracy is more than or equal to a reference level and outputs the estimated values of the parameters to the abnormality cause decision unit 400 at step S315, as is the case for the first embodiment.

However, if the integrated difference value is not less than or equal to the preset threshold, the parameter estimation unit 300 judges that the estimation accuracy is lower than the reference level and outputs only information that the vehicle is abnormal, but does not output the estimated values of the parameters (including a parameter estimated to be a cause of abnormality)

As described hereinbefore, the abnormality detection apparatus for railway vehicles of the present embodiment is capable of outputting at least abnormality occurring in the vehicle without stopping abnormality detection, even in a case where the accuracy of estimating the parameters is not sufficient.

### List of Reference Signs

1 vehicle body, 4 yaw damper, 8 air suspension spring, 11 bogie frame, 12 axle box body, 13 wheel axle, 14 axle spring device, 15 axle box support rubber, 16 bogie, 20 rail track, 30 abnormality cause detection device, 50 operation data detection unit, 60 vibration data detection unit, 100 data analysis unit, 200 comparison processing unit, 300 parameter estimation unit, 400 abnormality cause decision unit, 500 decision result output unit.

## Claims

1. An abnormality detection apparatus for at least two rail vehicles (A, B), comprising:
a vibration data acquisition unit (60) which acquires vibration data of the rail vehicles (A, B);
an operation data acquisition unit (50) which acquires operation data of the rail vehicles (A, B); and
a data analysis unit (100) which distinguishes whether each of the rail vehicles (A, B) traveling on a same track (20) is placed in normal or abnormal condition, based on the vibration data and the operation data, and extracts vibration data of the rail vehicles (A, B) in association with a normal or abnormal condition, **characterised in that** the apparatus further comprises:
a comparison processing unit (200) which compares the vibration data of a rail vehicle (A) placed in normal condition and the vibration data of a rail vehicle (B) placed in abnormal condition and calculates a result of comparison; and
a diagnosis unit which decides on a cause of abnormality of vibration in the rail vehicle (B) distinguished as being placed in abnormal condition, based on the result of comparison.

2. The abnormality detection apparatus for at least two rail vehicles (A, B) according to claim 1, wherein the diagnosis unit comprises:
a parameter estimation unit (300) which estimates parameters regarding internal conditions of a rail vehicle (B) placed in abnormal condition, based on the result of comparison calculated by the comparison processing unit (200); and
an abnormality cause decision unit (400) which decides on a cause of abnormality of vibration in the rail vehicle (B) placed in abnormal condition, based on the estimated parameters.

3. The abnormality detection apparatus for at least two rail vehicles (A, B) according to claim 2, wherein the parameter estimation unit (300) estimates the parameters regarding internal conditions of a rail vehicle (B) placed in abnormal condition, based on a power spectrum density (PSD) ratio of a rail vehicle (A) placed in normal condition and a rail vehicle (B) placed in abnormal condition.

4. The abnormality detection apparatus for at least two rail vehicles (A, B) according to claim 2 or 3, wherein the parameter estimation unit (300) estimates the parameters regarding internal conditions of a rail vehicle (B) placed in abnormal condition, based on a dynamic model for predicting vibration characteristics of a rail vehicle (B) placed in abnormal condition.

5. The abnormality detection apparatus for at least two rail vehicles (A, B) according to claim 4, wherein the dynamic model is a rail vehicle transverse dynamic model or a rail vehicle vertical dynamic model.

6. The abnormality detection apparatus for at least two rail vehicles (A, B) according to any one of claims 2 to 5, wherein the abnormality cause decision unit (400) decides on a cause of abnormality of vibration in the rail vehicle (B) placed in abnormal condition, based on a result of comparison between estimated values of the parameters regarding internal conditions of a rail vehicle (B) placed in abnormal condition, estimated by the parameter estimation unit (300), and normal values thereof.

7. The abnormality detection apparatus for at least two rail vehicles (A, B) according to any one of claims 2 to 6, wherein the parameter estimation unit (300) identifies track irregularities based on vibration data of the rail vehicle (B) placed in abnormal condition.

8. The abnormality detection apparatus for at least two rail vehicles (A, B) according to any one of claims 2 to 7, wherein the parameter estimation unit (300) determines estimation accuracy of estimated values of the parameters regarding internal conditions of a rail vehicle (B) placed in abnormal condition, outputs a parameter estimated to be a cause of abnormality, if the determined estimation accuracy is more than or equal to a reference level, and outputs only information indicating that a rail vehicle (B) placed in abnormal condition is abnormal, if the determined estimation accuracy is lower than the reference level.

9. The abnormality detection apparatus for at least two rail vehicles (A, B) according to any one of claims 1 to 8, wherein the vibration data acquisition unit (60) detects vibration of a vehicle body (1), a bogie frame (11), or an axle box body (12) of each rail vehicle (A, B).

10. The abnormality detection apparatus for at least two rail vehicles (A, B) according to any one of claims 1 to 9, wherein the vibration data acquisition unit (60) and the operation data acquisition unit (50) are provided in rail vehicles (A, B) in a single train set or in rail vehicles (A, B) in different train sets traveling on the same rail track (20).

11. The abnormality detection apparatus for at least two rail vehicles (A, B) according to any one of claims 1 to 10, wherein the data analysis unit (100) extracts vibration data of each rail vehicle (A, B) in a representative section which was set from among rail vehicle traveling sections.

12. The abnormality detection apparatus for at least two rail vehicles (A, B) according to any one of claims 1 to 11, wherein the comparison processing unit (200), if vibration data of each rail vehicle (A, B) exceeds a threshold, judges that the rail vehicle (B) is placed in abnormal condition and, if the vibration data does not exceed the threshold, judges that the rail vehicle (A) is placed in normal condition.

## Patentansprüche

1. Anomaliedetektionsvorrichtung für zumindest zwei Schienenfahrzeuge (A, B), umfassend:
eine Vibrationsdatenerfassungseinheit (60), die Vibrationsdaten der Schienenfahrzeuge (A, B) erfasst;
eine Betriebsdatenerfassungseinheit (50), die Betriebsdaten der Schienenfahrzeuge (A, B) erfasst; und
eine Datenanalyseeinheit (100), die beruhend auf den Vibrationsdaten und den Betriebsdaten erkennt, ob jedes aus den Schienenfahrzeugen (A, B), die auf demselben Gleis (20) fahren, sich in einem normalen oder anormalen Zustand befindet, und Vibrationsdaten der Schienenfahrzeuge (A, B) in Verbindung mit einem normalen oder anormalen Zustand extrahiert, **dadurch gekennzeichnet, dass** die Vorrichtung ferner Folgendes umfasst:
eine Vergleichsverarbeitungseinheit (200), welche die Vibrationsdaten eines Schienenfahrzeugs (A), das sich in einem normalen Zustand befindet, und die Vibrationsdaten eines Schienenfahrzeugs (B), das sich in einem anormalen Zustand befindet, vergleicht und ein Ergebnis des Vergleichs berechnet; und
eine Diagnoseeinheit, die beruhend auf dem Ergebnis des Vergleichs über die Ursache einer Vibrationsanomalie im Schienenfahrzeug (B) entscheidet, bei dem erkannt wurde, dass es sich in einem anormalen Zustand befindet.

2. Anomaliedetektionsvorrichtung für zumindest zwei Schienenfahrzeuge (A, B) nach Anspruch 1, wobei die Diagnoseeinheit Folgendes umfasst:
eine Parameterschätzungseinheit (300), die Parameter betreffend innere Zustände eines Schienenfahrzeugs (B), das sich in einem anormalen Zustand befindet, beruhend auf dem von der Vergleichsverarbeitungseinheit (200) berechneten Ergebnis des Vergleichs schätzt; und
eine Anomalieursacheentscheidungseinheit (400), die über die Ursache einer Vibrationsanomalie im Schienenfahrzeug (B), das sich in einem anormalen Zustand befindet, beruhend auf den geschätzten Parametern entscheidet.

3. Anomaliedetektionsvorrichtung für zumindest zwei Schienenfahrzeuge (A, B) nach Anspruch 2, wobei die Parameterschätzungseinheit (300) die Parameter betreffend innere Zustände eines Schienenfahrzeugs (B), das sich in einem anormalen Zustand befindet, beruhend auf einem Leistungsspektrumsdichte-(PSD)-Verhältnis eines Schienenfahrzeugs (A), das sich in einem normalen Zustand befindet, und eines Schienenfahrzeugs (B), das sich in einem anormalen Zustand befindet, schätzt.

4. Anomaliedetektionsvorrichtung für zumindest zwei Schienenfahrzeuge (A, B) nach Anspruch 2 oder 3, wobei die Parameterschätzungseinheit (300) die Parameter betreffend innere Bedingungen eines Schienenfahrzeugs (B), das sich in einem anormalen Zustand befindet, beruhend auf einem dynamischen Modell für die Vorhersage von Vibrationseigenschaften eines Schienenfahrzeugs (B), das sich in einem anormalen Zustand befindet, schätzt.

5. Anomaliedetektionsvorrichtung für zumindest zwei Schienenfahrzeuge (A, B) nach Anspruch 4, wobei das dynamische Modell ein transversales dynamisches Schienenfahrzeug-Modell oder ein vertikales dynamisches Schienenfahrzeug-Modell ist.

6. Anomaliedetektionsvorrichtung für zumindest zwei Schienenfahrzeuge (A, B) nach einem der Ansprüche 2 bis 5, wobei die Anomalieursacheentscheidungseinheit (400) über die Ursache einer Vibrationsanomalie beruhend auf dem Ergebnis eines Vergleichs zwischen geschätzten Werten der Parameter betreffend innere Zustände eines Schienenfahrzeugs (B), das sich in einem anormalen Zustand befindet, die von der Parameterschätzungseinheit (300) geschätzt werden, und Normalwerten davon entscheidet.

7. Anomaliedetektionsvorrichtung für zumindest zwei Schienenfahrzeuge (A, B) nach einem der Ansprüche 2 bis 6, wobei die Parameterschätzungseinheit (300) Gleisunregelmäßigkeiten beruhend auf Vibrationsdaten des Schienenfahrzeugs (B), das sich in einem anormalen Zustand befindet, identifiziert.

8. Anomaliedetektionsvorrichtung für zumindest zwei Schienenfahrzeuge (A, B) nach einem der Ansprüche 2 bis 7, wobei die Parameterschätzungseinheit (300) die Schätzungsgenauigkeit von geschätzten Werten der Parameter betreffend innere Zustände eines Schienenfahrzeugs (B), das sich in einem anormalen Zustand befindet, bestimmt, einen Parameter, von dem geschätzt wird, dass er eine Ursache für eine Anomalie ist, ausgibt, wenn die bestimmte Schätzungsgenauigkeit größer oder gleich einem Referenzpegel ist, und Informationen, die angeben, dass ein Schienenfahrzeug (B), das sich in einem anormalen Zustand befindet, anormal ist, nur ausgibt, wenn die bestimmte Schätzungsgenauigkeit unter dem Referenzpegel liegt.

9. Anomaliedetektionsvorrichtung für zumindest zwei Schienenfahrzeuge (A, B) nach einem der Ansprüche 1 bis 8, wobei die Vibrationsdatenerfassungseinheit (60) Vibrationen eines Fahrzeugkörpers (1), eines Drehgestellrahmens (11) oder eines Achslagerkörpers (12) von jedem Schienenfahrzeug (A, B) detektiert.

10. Anomaliedetektionsvorrichtung für zumindest zwei Schienenfahrzeuge (A, B) nach einem der Ansprüche 1 bis 9, wobei die Vibrationsdatenerfassungseinheit (60) und die Betriebsdatenerfassungseinheit (50) in Schienenfahrzeugen (A, B) in einer einzelnen Zuggarnitur oder in Schienenfahrzeugen (A, B) in verschiedenen Zuggarnituren, die auf demselben Eisenbahngleis (20) fahren, bereitgestellt sind.

11. Anomaliedetektionsvorrichtung für zumindest zwei Schienenfahrzeuge (A, B) nach einem der Ansprüche 1 bis 10, wobei die Datenanalyseeinheit (100) Vibrationsdaten von jedem Schienenfahrzeug (A, B) in einem repräsentativen Abschnitt, der aus Schienenfahrzeugfahrtabschnitten festgelegt wurde, extrahiert.

12. Anomaliedetektionsvorrichtung für zumindest zwei Schienenfahrzeuge (A, B) nach einem der Ansprüche 1 bis 11, wobei die Vergleichsverarbeitungseinheit (200), wenn Vibrationsdaten von jedem Schienenfahrzeug (A, B) über einer Schwelle liegen, urteilt, dass das Schienenfahrzeug (B) sich in einem anormalen Zustand befindet, und, wenn die Vibrationsdaten nicht über der Schwelle liegen, urteilt, dass das Schienenfahrzeug (A) sich in einem normalen Zustand befindet.

## Revendications

1. Appareil de détection d'anomalie pour au moins deux véhicules ferroviaires (A, B), comprenant :
une unité d'acquisition de données de vibration (60) qui acquiert des données de vibration des véhicules ferroviaires (A, B) ;
une unité d'acquisition de données de fonctionnement (50) qui acquiert des données de fonctionnement des véhicules ferroviaires (A, B) ; et
une unité d'analyse de données (100) qui distingue si chacun des véhicules ferroviaires (A, B) circulant sur une même voie (20) est placé dans une condition normale ou anormal, sur la base des données de vibration et des données de fonctionnement, et extrait des données de vibration des véhicules ferroviaires (A, B) en association avec une condition normale ou anormale, **caractérisé en ce que** l'appareil comprend en outre :
une unité de traitement de comparaison (200) qui compare les données de vibration d'un véhicule ferroviaire (A) placé dans une condition normale et les données de vibration d'un véhicule ferroviaire (B) placé dans une condition anormale, et calcule un résultat de comparaison ; et
une unité de diagnostic qui décide d'une cause d'anomalie de vibrations dans le véhicule ferroviaire (B) distingué comme étant placé dans une condition anormale, sur la base du résultat de comparaison.

2. Appareil de détection d'anomalie pour au moins deux véhicules ferroviaires (A, B) selon la revendication 1, dans lequel l'unité de diagnostic comprend :
une unité d'estimation de paramètre (300) qui estime des paramètres concernant des conditions internes d'un véhicule ferroviaire (B) placé dans une condition anormale, sur la base du résultat de comparaison calculé par l'unité de traitement de comparaison (200) ; et
une unité de décision de cause d'anomalie (400) qui décide d'une cause d'anomalie de vibration dans le véhicule ferroviaire (B) placé dans une condition anormale, sur la base des paramètres estimés.

3. Appareil de détection d'anomalie pour au moins deux véhicules ferroviaires (A, B) selon la revendication 2, dans lequel l'unité d'estimation de paramètre (300) estime les paramètres concernant des conditions internes d'un véhicule ferroviaire (B) placé dans une condition anormale, sur la base d'un rapport de densité de spectre de puissance (PSD) d'un véhicule ferroviaire (A) placé dans une condition normale et d'un véhicule ferroviaire (B) placé dans une condition anormale.

4. Appareil de détection d'anomalie pour au moins deux véhicules ferroviaires (A, B) selon la revendication 2 ou 3, dans lequel l'unité d'estimation de paramètre (300) estime les paramètres concernant des conditions internes d'un véhicule ferroviaire (B) placé dans une condition anormale, sur la base d'un modèle dynamique pour prédire des caractéristiques de vibration d'un véhicule ferroviaire (B) placé dans une condition anormale.

5. Appareil de détection d'anomalie pour au moins deux véhicules ferroviaires (A, B) selon la revendication 4, dans lequel le modèle dynamique est un modèle dynamique transversal de véhicule ferroviaire ou un modèle dynamique vertical de véhicule ferroviaire.

6. Appareil de détection d'anomalie pour au moins deux véhicules ferroviaires (A, B) selon l'une quelconque des revendications 2 à 5, dans lequel l'unité de décision de cause d'anomalie (400) décide d'une cause d'anomalie de vibration dans le véhicule ferroviaire (B) placé dans une condition anormale, sur la base d'un résultat de comparaison entre des valeurs estimées des paramètres concernant des conditions internes d'un véhicule ferroviaire (B) placé dans une condition anormale, estimées par l'unité d'estimation de paramètre (300), et des valeurs normales de ceux-ci.

7. Appareil de détection d'anomalie pour au moins deux véhicules ferroviaires (A, B) selon l'une quelconque des revendications 2 à 6, dans lequel l'unité d'estimation de paramètre (300) identifie des irrégularités de voie sur la base de données de vibration du véhicule ferroviaire (B) placé dans une condition anormale.

8. Appareil de détection d'anomalie pour au moins deux véhicules ferroviaires (A, B) selon l'une quelconque des revendications 2 à 7, dans lequel l'unité d'estimation de paramètre (300) détermine une précision d'estimation de valeurs estimées des paramètres concernant des conditions internes d'un véhicule ferroviaire (B) placé dans une condition anormale, délivre en sortie un paramètre estimé comme étant une cause d'anomalie, si la précision d'estimation déterminée est supérieure ou égale à un niveau de référence, et délivre en sortie uniquement des informations indiquant qu'un véhicule ferroviaire (B) placé dans une condition anormale est anormal, si la précision d'estimation déterminée est inférieure au niveau de référence.

9. Appareil de détection d'anomalie pour au moins deux véhicules ferroviaires (A, B) selon l'une quelconque des revendications 1 à 8, dans lequel l'unité d'acquisition de données de vibration (60) détecte une vibration d'un corps de véhicule (1), d'un châssis de bogie (11) ou d'un corps de boîte d'essieu (12) de chaque véhicule ferroviaire (A, B).

10. Appareil de détection d'anomalie pour au moins deux véhicules ferroviaires (A, B) selon l'une quelconque des revendications 1 à 9, dans lequel l'unité d'acquisition de données de vibration (60) et l'unité d'acquisition de données de fonctionnement (50) sont fournies dans des véhicules ferroviaires (A, B) dans un seul train ou dans des véhicules ferroviaires (A, B) dans des trains différents se déplaçant sur la même voie ferrée (20).

11. Appareil de détection d'anomalie pour au moins deux véhicules ferroviaires (A, B) selon l'une quelconque des revendications 1 à 10, dans lequel l'unité d'analyse de données (100) extrait des données de vibration de chaque véhicule ferroviaire (A, B) dans une section représentative qui a été définie parmi des sections de déplacement de véhicule ferroviaire.

12. Appareil de détection d'anomalie pour au moins deux véhicules ferroviaires (A, B) selon l'une quelconque des revendications 1 à 11, dans lequel l'unité de traitement de comparaison (200), si des données de vibrations de chaque véhicule ferroviaire (A, B) dépassent un seuil, juge que le véhicule ferroviaire (B) est placé dans une condition anormale et, si les données de vibrations ne dépassent pas le seuil, juge que le véhicule ferroviaire (A) est placé dans une condition normale.
